# EUROPÄISCHE PATENTANMELDUNG

(11) **EP 3 629 264 A1**
(43) Veröffentlichungstag der Anmeldung: **01.04.2020**
(21) Anmeldenummer: 18197562.4
(22) Anmeldetag: 28.09.2018
(51) Int. Cl.: G06Q 10/06, G06Q 50/04

(54) **PRODUKTIONSMODUL**

(71) Anmelder: Siemens Aktiengesellschaft, 80333 München (DE)
(72) Erfinder: Buschmann, Frank, 80336 München (DE); Zahorcak, Vladimir, 900 32 Borinka (SK)

(57) **Zusammenfassung**

Die Erfindung betrifft ein Produktionsmodul zum Ausführen zumindest einer Produktionsfunktion auf oder für ein Produkt, wobei die Produktionsfunktion zum Zusammenwirken mit einer weiteren Produktionsfunktion eines weiteren Produktionsmoduls in einer Produktion ausgestaltet ist, und das Produktionsmodul als selbst-ähnliches fraktales Modul realisierbar ist, mit einer Ausführeinheit zum autonomen Ausführen der zumindest einen Produktionsfunktion, mit einer Prozessoreinheit zum Bereitstellen von einem Produktionsservice zum Zugreifen auf die zumindest eine Produktionsfunktion, einem Selbstbeschreibungsservice zum Bereitstellen und Mitteilen einer Selbstbeschreibungsinformation mit Eigenschaften der Produktionsfunktion für das weitere Produktionsmodul und zum Aufnehmen einer weiteren Selbstbeschreibungsinformation mit Eigenschaften der weiteren Produktionsfunktion, einem Koppelservice zum Festlegen einer Kooperationszone mittels Erstellung einer Kooperationsinformation bei der die Produktionsfunktion und die weitere Produktionsfunktion, insbesondere nacheinander oder gleichzeitig, auf oder für das Produkt ausgeführt werden können, einem Automatisierungsservice zum Festlegen von Kooperationsparameter der Kooperationszone zum Ausführen der Produktionsfunktion auf oder für das Produkt gemäß einer Produktionsanforderung, und mit einer Produktionsschnittstelle Austausch einer Kontrollinformation mit dem weiteren Produktionsmodul in Form von Befehlen zum Steuern der Produktionsfunktion und in Form zumindest einer Zustandsinformation der Produktionsfunktion und zumindest einer weiteren Zustandsinformation der weiteren Produktionsfunktion.

## Beschreibung

Die Erfindung betrifft ein Produktionsmodul zur Durchführung einer Produktionsfunktion für ein Produkt im Rahmen einer Produktion.

Mit heutigen Technologien ist eine kosteneffiziente Massenproduktion von komplexen und individualisierten Produkten, z. B. von Personenkraftwagen, nur möglich, falls alle möglichen Varianten des Produkts während der Produktplanungsphase bereits berücksichtigt werden. Sobald das Produktdesign und das Produktengineering bekannt sind, wird ein spezifischer Produktionsprozess erstellt, der Produktionseinrichtungen aufweist, die in der Lage sind den spezifischen Produktionsprozess zu realisieren. Falls neue Produktvarianten unterstützt werden sollen, muss der komplette Entwicklungs- und Planungsprozess mit zusätzlichen Aufwendungen und Kosten wiederholt durchgeführt werden. Je mehr ein Produktportfolio durch entsprechende Varianten beeinflussbar ist, desto weniger effizient und wohl auch profitabel wird deren Herstellungsprozess. Eine Alternative zur Massenproduktion ist eine Einzel- oder Kleinserienfertigung individueller Produkte, die aber aufgrund der hohen Aufwände für Planung und Einrichtung der Produktion äußerst kostenintensiv ist, sodass dieser Ansatz nur für Kleinserien für hochpreisige Produkte mit großen Gwewinnmargen überhaupt in Frage kommt.

Daher ist es die Aufgabe der vorliegenden Erfindung eine Möglichkeit zu schaffen eine Produktionsplanung als auch eine Produktion eines Produktes dynamisch an vorgegebene und sich dynamisch ändernde Anforderungen anpassbar zu machen. Diese Aufgabe wird gelöst durch ein Produktionsmodul mit den Merkmalen des vorliegenden Patentanspruchs 1. Weiterbildungen der Erfindung sind den abhängigen Ansprüchen zu entnehmen.

Die Erfindung betrifft ein Produktionsmodul zum Ausführen zumindest einer Produktionsfunktion auf oder für ein Produkt, wobei die Produktionsfunktion zum Zusammenwirken mit einer weiteren Produktionsfunktion eines weiteren Produktionsmoduls in einer Produktion ausgestaltet ist.

Nachfolgend werden die Begriffe Produkt und Werkstück synonym verwendet, falls nichts Gegenteiliges erläutert wird.

Unter dem Begriff Produktionsfunktion wird im Rahmen dieser Beschreibung beispielsweise verstanden, dass ein Produkt durch die Produktionsfunktion bearbeitet und/oder transportiert wird. Das Produkt selbst kann im Allgemeinen jede Art von bearbeitbarer Materie sein, wie beispielsweise ein Holzblock, ein Stahlblock, ein Kunststoffblock oder auch eine Flüssigkeit. Die Bearbeitung hängt dann von der konkreten Ausgestaltung des Produkts ab, beispielsweise bei einer Flüssigkeit kann die Produktionsfunktion eine Filterung der Flüssigkeit oder auch eine Messung von Bestandteilen in der Flüssigkeit umfassen. Bei einem festen Material als Produkt kann die Produktionsfunktion durch ein Einfärben der Oberfläche des Produkts oder durch ein Fräsen ausgestaltet sein. Während das Produkt die Produktion durchläuft, kann es seine äußere Gestalt verändern. Somit wirken die Produktionsfunktion und/oder die weitere Produktionsfunktion auf das Produkt. Ferner kann als Produktionsfunktion auch ein in Software, Hardware und/oder in einer Kombination hiervon ausgebildeter Datenverarbeitungsprozess und/oder Datenbereitstellungsprozess verstanden werden, bei dem für das Produkt eine Datenverarbeitung im Rahmen der Produktion für das Produkt stattfindet. Hierzu kann die Produktionsfunktion auf Basis von Messwerten der Produktion, wie Luftfeuchte oder Temperatur, ein Verhältnis zur Mischung von zwei Flüssigkeiten ermitteln, welche die weitere Produktionsfunktion beispielsweise zum Aufbringen eines Lacks verwendet. Unter Produktion wird im Rahmen der Beschreibung eine durch eine zeitliche Abfolge von durchgeführten Produktionsfunktionen auf bzw. für das Produkt einwirkender Transport und/oder Bearbeitungsschritte verstanden. Das Produkt kann in einer Produktionsfunktion auch durch ein Teilprodukt ergänzt werden, z.B. Montage einer Schraube in das Produkt. Die Produktion kann somit aus einer Vielzahl von Produktionsfunktionen der Produktionsmodule realisiert werden.

Für das weitere Produktionsmodul und dessen weitere Produktionsfunktion gilt das zur Produktionsfunktion des Produktionsmoduls Dargestellte ebenso.

Bei der Erfindung ist das Produktionsmodul als selbst-ähnliches fraktales Modul durch die nachfolgend beschriebenen Einheiten realisierbar. Die Verwendung einer fraktalen Architektur ermöglicht eine dynamische Komposition und einfache Neuanordnung der jeweiligen Produktionsmodule der Produktion. Selbst-ähnlich bedeutet im Rahmen der Beschreibung, dass ein einzelnes Produktionsmodul sich an seinen Schnittstellen nach außen genauso verhält, wie ein Cluster an Produktionsmodulen, wobei sich das Cluster nach außen so verhält, wie ein einzelnes Produktionsmodul. Lediglich eine Anzahl an verfügbaren Produktionsmodulen ist in der Regel in dem Cluster größer als in einem einzelnen Produktionsmodul. Ein Zusammenschluss mehrerer Produktionsmodule wird als Produktionssystem bezeichnet. Eine konkrete Ausgestaltung zur Fertigung eines konkreten Produktes stellt die Produktion für dieses konkrete Produkt dar.

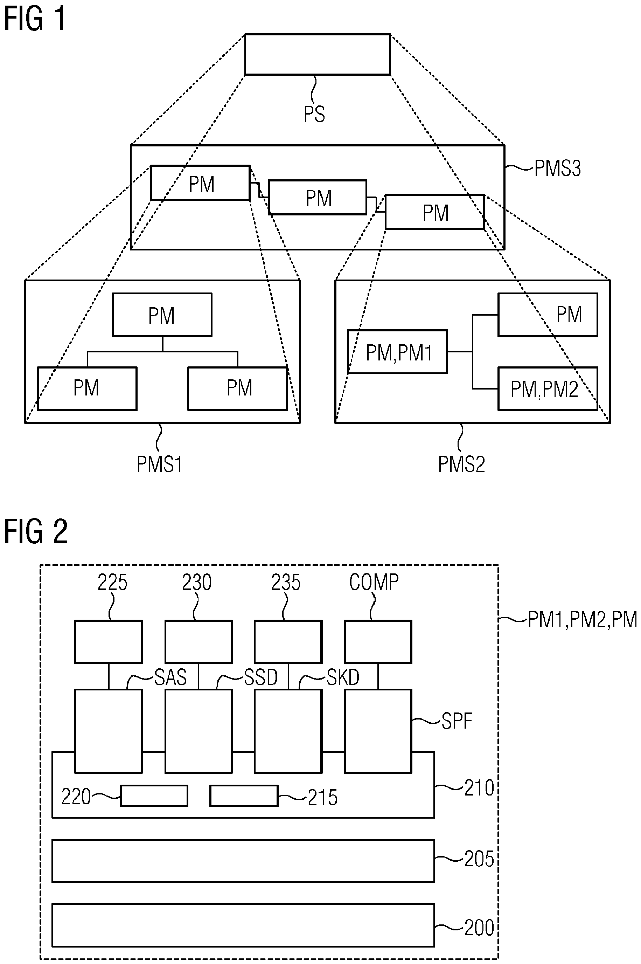

Das Produktionsmodul als selbst-ähnliches fraktales Modul kann in jeder Ebene des Produktionssystems, d.h. der Produktionsanlage, vorkommen, wie beispielsweise auf einer Arbeitseinheitsebene, auf einer Arbeitscenterebene, auf einer Produktionsebene oder sogar auf einer Produktionsstandortsebene. Aufgrund seiner Selbstähnlichkeit ermöglicht der oben beschriebene Ansatz hierarchische Produktionskonfigurationen mittels gemeinsamer einheitlicher Methoden zum Erstellen des Produktionssystems. Eine bekannte Methode zum Erstellen ist beispielsweise als "Composite Pattern", aus einer Referenz [1] bekannt. So wird in dem beschriebenen Design der Erfindung ein hierarchischer Strukturansatz gewählt, bei dem jedes Element, wie bspw. jedes Produktionsmodul, in der Hierarchie - in zusammengesetzter Form oder als atomare Einheit - gleiche Eigenschaften bezüglich der verwendeten Schnittstellen, des funktionellen Verhaltens und der Komposition beim Zusammenschluss von Strukturen erfüllt. Hieraus entsteht ein fraktales hierarchisches Design. Wird diese Vorgehensweise auf die selbstähnlichen Produktionsmodule angewandt, ergibt sich das fraktale Produktionssystem. Ein konkretes Einfügen eines Produktionsmoduls in eine derartige Hierarchie ist für sich fraktal, wodurch sich in rekursiver Weise ein fraktales Design eines Zusammenschlusses mehrerer selbstähnlicher Produktionsmodule der gesamten Produktion in allen hierarchischen Ebenen ergibt. In Figur 1 ist dies exemplarisch dargestellt, wobei die fraktale Produktion in drei Ebenen dargestellt ist. Auf die Figur 1 wird im Beschreibungsteil der Ausführungsbeispiele näher eingegangen.

Die rekursive Zusammenstellung des Produktionssystems aus selbstähnlichen fraktalen Produktionsmodulen stellt die fundamentale Methode für die rekursive Zusammenstellung der Produktion von selbstähnlichen fraktalen Produktionsmodulen in Richtung einer flexiblen für das Zusammenstellen und auch nachträgliche Ändern einer Produktionssystems und somit für die Produktion dar. Eine derartige aufgebaute Produktion ermöglicht eine schnelle Anpassung, beispielsweise bei auftretenden Fehlern oder bei Produktionsanforderungen, für stark individualisierte Produkte.

Bei der oben dargestellten Vorgehensweise wird eine Zusammenarbeit, d.h. Kooperation, zwischen mehreren selbstbeschreibenden, fraktalen Produktionsmodulen zu einer Zusammenarbeit führen, die aufgrund ihrer einheitlichen generischen Produktionsfähigkeitsbeschreibungen und Interaktionsvorgängen und der Verfügbarkeit von jeweiligen digitalen Selbstbeschreibungsinformation der Produktionsfunktionen auf Grundlage allgemeiner Standards keine weiteren manuellen Eingriffe bei Komposition und/oder nachfolgenden Änderung benötigt. Verglichen mit gegenwertigen Technologien ermöglicht die oben genannte Vorgehensweise eine erhebliche Einsparung bei einer Planung der Produktion bzw. des Produktionssystems, sowie bei deren Installation. Ferner ermöglichen die selbstbeschreibenden Produktionsmodule eine Vereinfachung und Reduktion von Zeit und Aufwänden sowohl bei einer Projektierung (im Englischen als Engineeren bezeichnet) und als auch bei dem Zusammenstellen eines konkreten Produktionsprozesses in einer Produktion. Mit diesem Ansatz werden eine Optimierung und damit auch eine einhergehende Kostenersparnis bei der Produktionseinrichtung und dem Betrieb während der Fertigung von vorgegebenen Produkten in erheblicher Weise ermöglicht. Hierdurch können unter Anderem auch Stillstandzeiten von Produktionsmodulen erheblich reduziert werden.

Das Produktionsmodul weist im Rahmen der Erfindung eine Ausführeinheit zum autonomen Ausführen der zumindest einen Produktionsfunktion auf, welche beispielsweise in einer vorzugsweisen Weiterbildung der Erfindung mittels mechanischer Komponenten, elektrischer Komponenten, Steuerungskomponenten, Sensorkomponenten oder Softwarekomponenten ausgebildet ist.

Die oben genannten Komponenten, einzeln oder in einer beliebigen Kombination, dienen bei der Durchführung der Produktionsfunktion dazu, dass die Produktionsfunktion auf das Produkt wirken kann. Die Produktionsfunktion ist dabei ein definierter Produktionsschritt innerhalb der Produktion, die durch einen Produktionsplan beschreibbar ist. Um die Produktionsfunktion durch das Produktionsmodul eigenständig, das heißt autonom, durchführen zu können, kann das Produktionsmodul mittels seiner Steuerungskomponente in Echtzeit Kontrollaufgaben und Optimierungsaufgaben des Produktionsschritts, aber auch Qualitätsüberwachungsaufgaben und eine Visualisierung von Zuständen des Produktionsmoduls autonom durchführen. Zudem kann die Ausführeinheit selbstständig zusätzliche Mittel zum Ausführen der Produktionsfunktion, die Elektrik und auch die Mechanik, die zur Ausführung der Produktionsfunktion notwendig sind, steuern, ohne dass ein Eingriff von außen notwendig ist. Der Eingriff von außen kann vor der Ausführung der Produktionsfunktion durch eine Parametrierung der Produktionsfunktion erfolgen, wie zum Beispiel einer Geschwindigkeit eines Förderbandes. Diese Parametrisierung kann durch einen Automatisierungsservice erfolgen. Die Ausführung der konkreten Produktionsfunktion erfolgt dann aber autonom.

Das Produktionsmodul weist ferner eine Prozessoreinheit zum Bereitstellen von mehreren Services auf.

Durch eine Verwendung von Services in einer Service-orientierten Architektur kann das Produktionsmodul dem weiteren Produktionsmodul mitteilen, welche konkreten Services das Produktionsmodul unterstützt. Ferner kann das Produktionsmodul von dem weiteren Produktionsmodul Informationen erhalten, welche Services das weitere Produktionsmodul anbietet. Durch die Verwendung von Services wird gewährleistet, dass zum einen nahezu jede Art von Funktionen des Produktionsmoduls bzw. des weiteren Produktionsmoduls "signalisiert" werden kann. Zum anderen kann durch die Verwendung von Services in einfacher Art und Weise ein Zugriff auf die Funktionen durch das Produktionsmodul selbst als auch durch das weitere Produktionsmodul in einer Art Fernzugriff ermöglicht werden.

Durch die Services lassen sich Produktionsmodule mit nahezu jeder Art von Produktionsfunktion realisieren, die mit weiteren Produktionsmodulen in einfacher und kostengünstiger Art und Weise mittels einer Kooperationszone koppelbar sind. Eine nähere Darstellung der Services kann den nachfolgenden Ausführungen genommen werden. Nachfolgend werden die Begriffe Prozessor und Prozessoreinheit synonym verwendet.

Als Service umfasst das Produktionsmodul einen Produktionsservice zum Bereitstellen der Produktionsfunktion.

Die Verwendung des Produktionsservices ermöglicht, dass das Produktionsmodul in dem Produktionssystem in einer einheitlichen Form identifiziert und ein Zugriff auf die zumindest eine Produktionsfunktion des Produktionsmoduls ermöglicht werden kann. Die Identifikation und der Zugriff werden dadurch ermöglicht, dass die Produktionsfunktion durch den Produktionsservice, beispielsweise als Software Service, realisiert wird. Der Produktionsservice wird verwaltet und ausgeführt in einer Echtzeitinfrastruktur einer Service-orientierten Architektur (SOA - Service Oriented Architecture), die auf dem Prozessor ausgeführt werden kann. Der Prozessor kann in Form eines programmierbarer Logikcontrollers oder in Form eiens embedded Industrie-PC ausgestaltet sein. Der Produktionsservice ist über eine Schnittstelle für das weitere Produktionsmodul erreichbar. Eine Servicemanagement-Funktionalität innerhalb der Service-orientierten Architektur, wie beispielsweise eine Service-Registrierungsfunktionalität und/oder eine Funktionalität zum Auffinden von Services innerhalb des Produktionssystems, ermöglicht das Auffinden und den Zugang zu dem Produktionsservice-Interface des Produktionsmoduls. Die Verwendung der serviceorientierten Architektur ermöglicht somit, dass das Interface des Produktionsservices aus der Ferne zugreifbar ist, welche eine wichtige Funktionalität für eine Kooperation zwischen zwei Produktionsmodulen in einem konkreten Produktionsprozess, beispielsweise innerhalb der Kooperationszone, ist.

Ferner weist das Produktionsmodul als Service einen Selbstbeschreibungsservice zum Bereitstellen und Mitteilen von Selbstbeschreibungsinformationen mit Eigenschaften der Produktionsfunktion für das weitere Produktionsmodul und zum Aufnehmen einer weiteren Selbstbeschreibungsinformation mit Eigenschaften der weiteren Produktionsfunktion auf.

Der Selbstbeschreibungsservice stellt die Selbstbeschreibungsinformation zur Verfügung. Die Selbstbeschreibungsinformation liefert Informationen zur Charakterisierung der zumindest einen Produktionsfunktion des Produktionsmoduls, wie beispielweise Informationen zum Identifizieren der Produktionsfunktion, Informationen über die konkreten Fähigkeiten, Konfigurationsparameter, Angaben zu Beschränkungen bspw. funktioneller und/oder technischer Ausführbarkeit, sowie Befehle, die die Produktionsfunktion verstehen und ggfs. ausführen kann, und Zustände, die sie mitteilen und verstehen kann. Die Selbstbeschreibungsinformation wird benutzt, um das Produktionsmodul zu beschreiben und zu prüfen, welche Selbstbeschreibungsinformationen für eine bestimmte Produktionsaufgabe in Abhängigkeit vom konkreten Produktionsplan der Produktion zur Verfügung stehen. Ferner kann die Selbstbeschreibungsinformation genutzt werden, um Produktionsfunktionen mit konkreten Produktionsparametern zu konfigurieren, um damit die Produktionsfunktionen mehrerer Produktionsmodule zusammenzustellen und gemäß eines Produktionsprozesses auszuführen.

Um die Selbstähnlichkeit aller Produktionsmodule in einem Produktionssystem zu gewährleisen, insbesondere falls Produktionsmodule von verschiedenen Herstellern stammen und möglicherweise auch auf verschiedenen Hardwareplattformen implementiert und ausgeführt werden, kann die Selbstbeschreibungsinformation, gemäß einer vorteilhaften Weiterbildung der Erfindung, mittels eines Standards, wie beispielsweise OPC UA, d.h. OPC Unified Architecture der OPC Foundation, dargestellt werden. Diese Standards ermöglichen eine Implementierung von Ontologien der Produktionsfunktion in einer definierten und standardisierten Art und Weise. Die Beschreibung der Produktionsfähigkeit des Produktionsmoduls mittels der Selbstbeschreibungsinformation und die öffentliche Zugänglichkeit dieser Beschreibung sind als Selbstbeschreibungsservice bzw. in Form eines digitalen Zwillings mittels der Service Orientierte Architektur realisierbar. Im Allgemeinen ist der digitale Zwilling ein virtuelles Abbild der Produktionsfunktion, wobei das Abbild durch eine permanente Aktualisierung dem Zustand der Produktionsfunktion angeglichen werden kann. Das virtuelle Abbild kann als Model mit den physikalischen Eigenschaften der realen Produktionsfunktion ausgebildet sein. Bei mehreren durch das Produktionsmodul ausführbaren Produktionsfunktionen kann es je Produktionsfunktion zumindest eine Selbstbeschreibungsinformation geben.

Ferner umfasst das Produktionsmodul einen Koppelservice zum Festlegen der Kooperationszone mittels Erstellung einer Kooperationsinformation (INFO), bei der die Produktionsfunktion und die weitere Produktionsfunktion, insbesondere nacheinander oder gleichzeitig, auf bzw. für das Produkt ausgeführt werden können.

Während die Architektur des fraktale Produktionssystems eine fundamentale Vorgehensweise für die flexible und dynamische Zusammenstellung von Produktionsmodulen darstellt, wird durch den Koppelservice diese Vorgehensweise dahingehend erweitert, dass ein automatisches Aushandeln konkreter und realisierbarer Zusammenarbeit zwischen dem fraktalen Produktionsmodul und seiner Kooperationspartner, wie beispielsweise mit direkten in der Nachbarschaft angeordneten weiteren Produktionsmodulen oder einem übergeordneten weiteren Produktionsmodul in dem fraktalen Produktionssystem ermöglicht wird.

Der Koppelservice benutzt den Selbstbeschreibungsservice, um Zugriff auf die Selbstbeschreibungsinformation bezüglich der zumindest einen Produktionsfunktion des Produktionsmoduls zu bekommen. Denn diese Beschreibung stellt die technische Grundlage für die konkrete Aushandlung und der Erstellung der Kooperationsinformation für die grundlegende Zusammenarbeit des Produktionsmoduls mit seinen Kooperationspartnern, wie beispielsweise dem weiteren Produktionsmodul, dar. Konkrete Aushandlung der selbstähnlichen Produktionsmodule mit ihren Kooperationspartnern kann dann in einer peer-to-peer Weise durch den Koppelservice und / oder durch einen Automatisierungsservice erfolgen, oder durch Inanspruchnahme einer weiteren Einheit die das Aushandeln vornimmt. Das Aushandeln selbst kann beispielsweise durch eine Auktion realisiert werden. Durch den Einsatz des Koppelservices wird eine flexible und kostengünstige Möglichkeit geschaffen zum einen auf Änderungen des Produktionsmoduls und/oder des weiteren Produktionsmoduls und zum anderen Änderungen des Produkts, beispielsweise bei der Individualisierung des Produkts, Rechnung zu tragen.

Ferner umfasst das Produktionsmodul einen Automatisierungsservice zum Festlegen von Kooperationsparameter zum Ausführen der Produktionsfunktion auf oder für das Produkt gemäß einer Produktionsanforderung.

Der Automatisierungsservice wird zur Durchführung einer konkreten Produktion auf Basis einer Produktionsanforderung aufgerufen. In Abhängigkeit von dem bzw. den auszuführenden Produktionsfunktionen werden diejenigen Produktionsfunktionen innerhalb des Produktionssystems ausgewählt, die in der Lage sind den bzw. die geforderten Produktionsschritte der Produktionsanforderung umzusetzen. In Abhängigkeit von dem zu fertigenden Produkt werden zunächst Kooperationsparameter innerhalb der jeweiligen Kooperationszonen festgelegt. Anschließend gehen die an der Produktion beteiligten Produktionsmodule in ihren Automatisierungszustand, d.h. in die Automatisierungsphase, in der sie auf eine konkrete Anwendung der Produktionsfunktionen warten, zum Beispiel durch Befehle und Zustandsinformationen getriggert einen Transport oder Verarbeitungsschritt an zu produzierenden Produkt anwenden. Sollte sich während der Automatisierungsphase die Konfiguration innerhalb des Produktionssystems, beispielsweise durch Ausfall eines Produktionsmoduls, wie zum Beispiel aufgrund eines technischen Defekts, verändern, so werden zumindest Teile der in der Plug-Phase durchlaufenden Schritte zum Konfigurieren der Automatisierungsphase mittels des Koppelservices und Teile des Automatisierungsservices wiederholt.

Zudem weist das Produktionsmodul eine Produktionsschnittstelle zum Austausch von Kontrollinformationen mit dem weiteren Produktionsmodul in Form von Befehlen zum Steuern der Produktionsfunktion und in Form von Zustandsinformationen der Produktionsfunktion und von Zustandsinformationen der weiteren Produktionsfunktion auf.

Die Produktionsschnittstelle ermöglicht das Zusammenwirken, d.h. die Kollaboration, von zwei Produktionsmodulen bzw. Produktionsfunktionen mittels Kontrollinformationen, d.h. über Befehle und Zustände, die durch die Selbstbeschreibungsinformationen des Produktionsmoduls definiert werden und die mittels des Koppelservice und des Automatisierungsservice für die konkrete Durchführung einer Kollaboration von zwei oder mehreren Produktionsfunktionen für ein konkretes Produkt konkretisiert werden. Durch die Befehle kann die Produktionsfunktion aktiv konfiguriert, beeinflusst und kontrolliert werden, beispielsweise um die Produktionsfunktion zu starten, zu stoppen oder zu beenden. Diese allgemeine und generische Vorgehensweise erlaubt konkrete Aktionen in Bezug auf die Produktionsfunktion zu realisieren unabhängig von einer konkreten Realisierung der Befehle und einer Komplexität der auszuführenden Befehle in dem Produktionsmodul. Befehle dieser Art ermöglichen daher eine große Anzahl verschiedenartiger Aktionen der Produktionsfunktion zu realisieren bzw. zu steuern, insbesondere Methoden zum Empfang generischer Befehle und Methoden, um generische Befehle zu verarbeiten und zu prozessieren, beispielsweise gemäß einer Vorgehensweise "command processor design pattern", wie in einer Referenz [2] näher ausgeführt.

Zustände werden in zweifacher Art und Weise verwendet. Die erste Art schreibt die Möglichkeit, dass das Produktionsmodul aktuelle eigene Zustände an das weitere Produktionsmodul übermittelt, beispielsweise, ob die Produktionsfunktion bereit ist ein Produkt zu bearbeiten, aufzunehmen oder das Produktionsmodul die Anwendung der Produktionsfunktion auf das Produkt beendet hat und das Produkt somit durch das weitere Produktionsmodul zur Durchführung der weiteren Produktionsfunktion bereitsteht. Eine zweite Art der Nutzung von Zuständen ist derart charakterisiert, dass das Produktionsmodul auf einen aktuellen Zustand der weiteren Produktionsfunktion und/oder der weiteren Produktionsmoduls reagieren kann, beispielsweise, dass das Produkt zur Übernahme durch das Produktionsmodul, d.h. zum Ausführen der eignen Produktionsfunktion, bereitsteht. In diesem Fall publiziert die weitere Produktionsfunktion bzw. das weitere Produktionsmodul seine Zustände in dem Produktionssystem. Die Verarbeitung der Zustände kann durch eine Beobachtermethode, gemäß Referenzdokument [1] und/oder gemäß einem Designmusterns gemäß Referenzdokument [2], erfolgen.

Die Produktionsschnittstelle, die Befehle und Zustände für den Produktionsservice bereitstellt, ermöglicht eine einfache, einheitliche und generische Prozedur für eine Interaktion mit einer oder mehreren Produktionsfunktionen des jeweiligen Produktionsmoduls. Derartige Interaktionen können zwischen mehreren selbstähnlichen Produktionsmodulen eingesetzt werden, wie z.B. bei einer direkten Zusammenarbeit zwischen Produktionsmodulen, oder zwischen einem selbstähnlichen Produktionsmodul und anderen Teilnehmern, wie beispielsweise einem IT-System, einer Datenanalyseeinheit, einem menschlichen Administrator über ein Mensch-Maschine-Interface, oder Produkte steuern ihren eigenen Produktprozess selbst über einen digitalen Produktspeicher. Eine aktive Kontrolle einer Produktionsfunktion wird durch Senden zugehöriger Befehle zu seiner Befehlsprozessschnittstelle innerhalb des Produktionsservices ausgelöst, um die Produktionsfunktion zu starten oder zu stoppen, den Produktionszustand in einen vorgebbaren Zustand zu versetzen oder Informationen zu einer nachfolgenden Diagnose anzufordern.

Eine reaktive Kontrolle bei der Ausführung der Produktionsfunktion wird durch Angabe von für die konkrete Produktion relevanter Zustände, wie bspw. dass die Produktionsfunktion die Bearbeitung an dem Produkt abgeschlossen hat oder wo die Produktionsfunktion das Produkt an die weitere Produktionsfunktion übergeben möchte, an seine Zustandsverarbeitungsschnittstelle realisiert, wobei die jeweiligen Zustände durch die in Verbindung stehende weitere Produktionseinheit des fraktalen Produktionssystems veröffentlicht werden. Immer wenn die Zustandsverarbeitungsschnittstelle innerhalb der Produktionsschnittstelle Informationen zu konkreten Zuständen erhält, wird die Implementierung der Produktionsfunktion eine dazugehörige Aktion ausführen. Beispielsweise startet das Produktionsmodul seine Kollaboration mit dem weiteren Produktionsmodul, wenn dieses weitere Produktionsmodul die Zustände "bereit" oder "verfügbar" übermittelt. In einem weiteren Beispiel startet das Produktionsmodul die Ausführung seiner Produktionsfunktion nachdem es eine Information zum Zustand erhalten hat, dass das Produkt oder Produktionsmittel, wie Schrauben und ähnliches, zum Bearbeiten bereitstehen. Jede konkrete Zusammenarbeit zwischen dem selbstähnlichen Produktionsmodul und anderen Kooperationspartnern ist eine Mischung von zwei Interaktionsarten, adaptiert an einen spezifischen Zusammenarbeitsauftrag, jedoch werden alle konkreten Zusammenarbeitsaufträge nach immer derselben einheitlichen und generischen Prozedur, wie oben beschrieben, abgearbeitet. Das jeweilige Produktionsmodul kann somit mit einer Vielzahl von Kooperationspartnern für einen folgenden Auftrag zusammenarbeiten, wie beispielsweise im Fall, dass mehrere Roboter eine komplexe Montage gemeinsam durchführen.

In einer vorzugsweisen Weiterbildung der Erfindung ist der Koppelservice des Produktionsmoduls ferner ausgestaltet, folgende Schritte zum Festlegen der Kooperationszone zu realisieren:
- Erkennen einer Topologie des weiteren Produktionsmoduls in einem Verbund weiterer Produktionsmodule als benachbartes und/oder übergeordnetes weiteres Produktionsmoduls;
- Erkennen der weiteren Produktionsfunktion, die von einer Position des Produktionsmoduls in dem Verbund der weiteren Produktionsmodule verfügbar und erreichbar ist;
- Mitteilen der Selbstbeschreibungsinformation an den Verbund der weiteren Produktionsmodule;
- Aushandeln einer Vorgehensweise, wie die Produktionsfunktion und die weitere Produktionsfunktion (PF2), insbesondere nacheinander oder gleichzeitig, auf oder für das Produkt ausgeführt werden können.

Sobald das Produktionsmodul, d.h. das selbstähnliche Produktionsmodul, physikalisch und elektrisch angeschlossen wird kann es das Herstellen und Einrichten der Kooperationszone durch den Koppelservice, d.h. den Schritt "Plug", mit einem oder mehreren weiteren Produktionsmodulen anstoßen. Im Allgemeinen können dann folgende Schritte durchlaufen werden.
1. Das Produktionsmodul entdeckt und verbindet sich mit dem bereits bestehenden Verbund von Produktionsmodulen, die in Form eines Produktionssystems organisiert sind.
2. Das Produktionsmodul ermittelt
   a) die Topologie des Produktionssystems: seine benachbarten Produktionsmodule und übergeordnete Produktionsmodule als auch andere Kooperationspartner innerhalb des Produktionssystems;
   b) Produktionsfähigkeiten, die verfügbar bzw. erreichbar sind von der aktuellen örtlichen Position des Produktionsmoduls in dem fraktalen Produktionssystem, gemäß der Topologie des Produktionssystems;
3. Das Produktionsmodul veröffentlicht seine eigene Produktionsfunktion bzw. Produktionsfunktionen in das Produktionssystem bspw. mittels der jeweiligen Selbstbeschreibungsinformation;
4. Das Produktionsmodul verhandelt seine Kooperation, auch als Kooperationszone bezeichnet, mit anderen Kooperationspartnern, insbesondere mit anderen Produktionsmodulen.

Das Produktionsmodul kann alle Zustände des Produktionssystems, die es interessiert, beispielsweise bezüglich der verhandelten Zusammenarbeit innerhalb der zu mindestens einen Kooperationszone abonnieren. Als bedeutender Schritt des obigen Ablaufs "Plug" ist Schritt 4 zu nennen. In diesem Schritt verhandelt das Produktionsmodul eine potentielle Zusammenarbeit mit seinen Kooperationspartnern. Hieraus ergibt sich als Ergebnis in welcher Art und Weise eine konkrete Zusammenarbeit im Bezug auf die örtliche Lage der Produktionsmodule, wie auch von Strategien und Parameter für die Übergabe und die gemeinsame Handhabung von Werkstücken und Materialien, durchgeführt werden kann.

Durch die Bereitstellung und Durchführung zumindest einiger der zuvor vorgestellten vier Schritte kann das Produktionsmodul in sehr flexibler Art und Weise auf Änderungen sowohl in der Topologie als auch bei der Produktionsanforderung aktiv reagieren und sehr schnell in einer neuen Produktion eingesetzt werden.

In einer weiteren vorzugsweisen Weiterbildung des erfinderischen Produktionsmoduls ist im Schritt "Aushandeln" für die Kooperationszone zumindest eine der folgenden Vorgehensweisen durchführbar:
- Bereitstellen einer Angabe eines örtlichen Bereichs, in dem die Produktionsfunktion und die weitere Produktionsfunktion auf oder für das Produkt ausführbar sind;
- Bereitstellen einer Vorgehensweise und Betriebsparameter der Produktionsfunktion und der weiteren Produktionsfunktion für eine Übergabe des Produkts von der Produktionsfunktion zur weiteren Produktionsfunktion;
- Bereitstellen einer Vorgehensweise und Betriebsparameter der Produktionsfunktion und der weiteren Produktionsfunktion für ein gemeinsames Vorgehen bzgl. des Produktes oder bzgl. eines Betriebsmittels zum Ausführen der Produktionsfunktion und der weiteren Produktionsfunktion.

Somit kann ausgehandelt werden, wie eine dynamische Zusammenstellung des Produktionssystems durch Zusammenarbeit von möglicherweise benachbarten Produktionsmodulen durchgeführt werden soll.

So können im Rahmen des Aushandelns die Produktionsfähigkeiten und sich überlappende Arbeitsbereiche von benachbarten Produktionsmodulen betrachtet werden. Produktionsfunktionen müssen eine "sinnvolle" Zusammenarbeit ermöglichen, wie beispielsweise das Produktionsmodule CNC Maschine (CNC - Computerized Numerical Control) bietet die Produktionsfunktion "Bohren" an, die die weitere Produktionsfunktion des weiteren Produktionsmoduls "Zuführung und Platzierung" des zu bearbeitenden Werkstücks benötigt. Ein Förderband, welches die Produktionsfunktion Transportieren anbietet, kann mit der Produktionsfunktion zusammenarbeiten, welche das Zuführen und das Platzieren eines Werkstücks anbietet, um das Werkstück zum oder vom Förderband zu bewegen. In einer anderen Variante kann als Produktionsfunktion auch eine Montagefähigkeit angeboten werden, welches während das Material zum Förderband transportiert wird den Demontageschritte durchführt. Falls die Fähigkeiten der Produktionsfunktionen zusammenpassen, wird geklärt, ob die Arbeitsbereiche der benachbarten Produktionsmodule ausreichend überlappend ist, um die Zusammenarbeit ausführen zu können. Beispielsweise falls ein Roboterarm von dem Förderband das Werkstück aufnehmen soll, muss der Arbeitsbereich des Roboterarmes über das Förderband reichen und es muss definiert werden, in welchem örtlichen Bereich auf dem Förderband der Roboterarm das Werkstück aufnehmen kann. Bereiche von selbstähnlichen Produktionsmodulen, bei denen eine Zusammenarbeit durchführbar ist, werden Kooperationszone genannt. Benachbarte Produktionsmodule müssen sich entweder auf vorgegebene Kooperationszonen einigen, wie beispielsweise eine Zuführeinheit einer CNC Maschine und ein dreidimensionaler Korridor um diese CNC Maschine zu erreichen. Alternativ oder zusätzlich dazu kann die Kooperationszone basierend auf überlappende Arbeitsbereiche auch ausgehandelt werden, wie für den oben genannten Fall, in dem der Greifer des Roboterarms Bereiche über dem Förderband erreichen und damit von dort das Werkstück aufnehmen bzw. absetzen kann. Ferner kann der Bereich auch derart verstanden werden, dass zwei Produktionsmodule Daten austauschen, die zum Bearbeiten des Produkts eingesetzt werden, wie beispielsweise ein Produktionsmodul hat die Produktionsfunktion zur Aufbringung einer Farbe auf das produkt, wobei die Farbzusammensetzung durch eine weitere Produktionsfunktion des weiteren Produktionsmoduls ermittelt und dem ersten Produktionsmodul übermittelt wird.

Hierbei besteht die Kooperationszone, d.h. der Bereich, zwischen dem Produktionsmodul und dem weiteren Produktionsmodul in dem Zusammenarbeiten der konkreten Ausgestaltung von einem oder mehreren Betriebsparametern, wie bspw. der Farbzusammensetzung, verwendet durch die Produktionsfunktion. Somit wirkt die weitere Produktionsfunktion auf das Produkt.

Ferner kann das selbstähnliche Produktionsmodul, welches innerhalb der Kooperationszone mit einem anderen Produktionsmodul zusammenarbeitet, sein konkretes Verhalten, das heißt seine Vorgehensweise, für die angestrebte Zusammenarbeit festlegen. Dies betrifft auch alle physikalischen und oder funktionellen Beschränkungen, das heißt Betriebsparameter, wie maximale Geschwindigkeit, Durchsatz oder größeres Werkstücks. Beispielsweise muss für ein zuverlässiges Aufnehmen des Werkstücks durch den Roboterarm vom Förderband die Geschwindigkeit des Förderbandes an die Bewegung des Roboterarms angepasst werden. Falls sich mehrere Produktionsmodule, wie Roboterarme, in einer Kooperationszone zusammenschließen, können oder müssen diese eine Vorgehensweise festlegen, um nicht um dasselbe Werkstück zu konkurrieren. Falls beispielsweise zwei Roboter innerhalb ihrer gemeinsamen Kooperationszone eine Übergabe des Werkstücks mittels ihrer Greifer durchführen wollen, müssen Sie die Geschwindigkeit der Roboterarme, der Winkel für die Übergabe und den Anpressdruck der Greifer auf das Werkstück festlegen. Bei der vorgeschlagenen Vorgehensweise kann ein menschlicher Operator die automatisch ausgehandelten und in der Kooperationszone zu verwendenden Parameter anpassen und / oder überschreiben.

Zudem kann das selbstähnliche Produktionsmodule Produktionsfunktionen verhandeln, die nur möglich sind, weil zwei Produktionsmodule benachbart sind. Beispielsweise kann eine CNC Maschine mit drei Achsen über eine gemeinsame Kooperationszone mit einem Roboter, der die Maschine mit dem Werkstück bestückt, derart verbunden werden, dass der Roboter die CNC Maschine mit zwei weiteren Achsen unterstützt, wodurch durch die Kooperationszone eine gemeinsame Bearbeitung möglich ist, wie an einer CNC Maschine mit fünf Achsen. In einem weiteren Beispiel können zwei Montageroboter aushandeln, dass sie komplexe Montageschritte durchführen, die nur durch diese zwei Roboter in der Kooperationszone ermöglicht werden, beispielsweise fügt der eine Roboter ein zweites Werkstück dem zu bearbeiten erstes Werkstück hinzu, wobei das Werkstück seine Lage verändern muss, damit das zweite Werkstück in das erste eingepasst werden kann.

Ergebnis des Aushandelns ist eine Kombination von zwei oder mehreren Produktionsfunktionen selbstähnliche Produktionsmodule des fraktale Produktionssystems. Durch den Koppelservice werden derartige Kombinationen als verfügbare neue Produktionsfunktionen des fraktale Produktionssystems festgelegt, die bei einer Definition eines Produktionsprozesses, das heißt gemäß einer Produktionsanforderung, zur Herstellung eines konkreten Produkts im Rahmen der Produktion zur Verfügung stehen und konfiguriert mit spezifischen Parametern für das zur fertigende Produkt einsetzbar sind. Diese Parameter werden auch im Rahmen dieser Beschreibung auch als Kooperationsinformationen bezeichnet.

In den Ausführungen zu dem Koppelservice ist dargestellt, dass zwei Produktionsfunktionen zusammenwirken können, wenn diese sich in einem überlappenden Arbeitsbereich befinden. Für Produktionsmodule, die das Werkstück transportieren oder physikalisch bearbeiten ist der überlappende Arbeitsbereich als örtlicher Bereich, beispielsweise in einer Fabrikhalle, zu verstehen. Zusätzlich oder alternativ hierzu kann das Produktionsmodul auch ein IP System sein, beispielsweise ein Industrie Computer, der als Produktionsfunktion beispielsweise eine Messung oder eine Optimierung von aufeinanderfolgenden Produktionsfunktionen für das Produkt erzeugt bzw. diese Produktionsfunktion auf das Produkt anwendet. In diesem Fall ist der überlappende Arbeitsbereich derart zu verstehen, dass das Produktionsmodul, welches eine Hardware-orientierte Produktionsfunktion durchführt, mit dem Produktionsmodul, welches eine nicht Hardware-orientierte Produktionsfunktion, wie eine Datenanalyse oder eine Messung, ausführt, auf einer nicht physischen Ebene zusammenwirken kann. Dies kann beispielsweise in einer Optimierung einer Bahn eines Fräsers einer CNC Werkzeugmaschine beim Bearbeiten des Werkstücks / Produktes sein. Das prinzipielle Zusammenwirken in der Koppelzone unterscheidet sich dann nicht, ob das Produktionsmodul Hardware-orientiert oder nicht-Hardware-orientiert ist. Lediglich die konkrete Ausgestaltung der Selbstbeschreibungsinformationen ist unterschiedlich.

In einer fakultativen Weiterbildung der Erfindung kann der Automatisierungsservice des Produktionsmoduls ferner ausgestaltet sein, bei einer Änderung bzgl. des Produktionsmoduls oder bzgl. des weiteren Produktionsmoduls den Koppelservice und das Festlegen der Kooperationsinformation der Kooperationszone zu initiieren.

Hierdurch wird in vorteilhafter Weise gewährleistet, dass wenn sich die Struktur des fraktale Produktionssystems während der Produktion ändert, beispielsweise weil ein neues selbst ähnliches Produktionsmodul hinzugefügt, entfernt oder an eine andere Position innerhalb des fatalen Produktionssystems gesetzt wird, oder weil das selbstähnliche Produktionsmodul nicht mehr funktioniert oder nicht mehr verfügbar ist, jedes selbstähnliche Produktionsmodul, welches durch die Änderung betroffen ist, sich selber dynamisch konfiguriert. Insbesondere werden mehrere Schritte zum Festlegen der Kooperationszone des Koppelservice, wie beispielsweise Erkennen der Topologie, Erkennen weiterer Produktionsfunktionen und Mitteilen der Selbstbeschreibungsinformation, durchgeführt, um sein eigenes Verhalten an die Änderung anzupassen und zu optimieren, um dann in die Produktionsphase über treten zu können.

Die durch den Koppelservice bereitgestellten Schritte werden als Plug-Phase und die durch den Automatisierungsservice bereitgestellten Schritte als Automation-Phase bezeichnet. Ein Vorteil des erfindungsgemäßen Produktionsmoduls ist darin begründet, dass beide Phasen sowohl in der digitalen, d. h. virtuellen, als auch in der physikalischen Welt ausführbar sind. Eine Ausführung in der virtuellen Welt ermöglicht einem Anlageningenieur die strukturelle Anordnung der selbstähnlichen Produktionsmodule und ihr Verhalten in der Plug-Phase und Automatisierungsphase vor einer realen Umsetzung zu evaluieren, simulieren und optimieren. Dieses virtuelle Kommissionierung und Testen der selbstähnlichen Produktionsmodule in einem fraktalen Produktionssystem vor seiner technischen Realisierung vermeidet kostspieliges und zeitintensives Ausprobieren von Anordnungen mehrerer Produktionsmodule die in der physikalischen Welt unbrauchbar sind.

Die Fähigkeiten der Plug-Phase und Automatisierungsphase selbst ähnlicher Produktionsmodule vermeidet Einschränkungen und ermöglicht ein Zusammenstellen eines flexibles Produktionssystems für gegenwärtige, fortschrittlichere Produktionsansätze, insbesondere eines holonischen Produktionssystems und fraktaler Fabriken.

Im Rahmen dieser Beschreibung wird unter Service-Orientierter Architektur nicht eine spezifische Implementierung, sondern eine spezifische Vorgehensweise beim Anbieten von Funktionen des Produktionsmoduls und beim Zugriff auf Funktionen des Produktionsmoduls spezifiziert. Die Funktionen des Produktionsmoduls betreffen Funktionen, die beispielsweise durch den Produktionsservice, den Selbstbeschreibungsservice, den Koppelservice und/oder den Automatisierungsservice realisiert werden. Eine Übertragung von Informationen dieser Services wie auch der Produktionsschnittstelle kann auf drahtgebundenen Netzwerkprotokollen, wie beispielsweise LAN (LAN - Local Area Network) oder Profibus, als auch mittels drahtloser Netzwerkprotokolle, wie beispielsweise WLAN (WLAN - Wireless Local Area Network), erfolgen. Einem Fachmann sind Ausführungen von Service-orientierten Architektur, wie beispielsweise in der Literaturstelle SOA [3] hinlänglich bekannt, sodass an dieser Stelle auf mögliche Realisierungen von Services basierend auf Service-orientierter Architektur nicht weiter eingegangen wird. Somit stellt die Verwendung der Services als Service-orientierte Architektur eine Plattform-, Hersteller- und Geräte-übergreifende Möglichkeit dar, auf die Funktionen des Produktionsmoduls, beispielsweise der Produktionsfunktion, in einer generischen Art und Weise zuzugreifen. So kann eine Service-Managementfunktion innerhalb des jeweiligen Services eine Registrierung von Services (im Englischen: service regristry) und ein Aufspüren von Services (im Englischen: service discovery) aufweisen, die das Auffinden und das Zugreifen auf Services wie des Produktionsservices ermöglicht.

Für das weitere Produktionsmodul und dessen weitere Produktionsfunktion gilt das bezüglich zur Produktionsfunktion des Produktionsmoduls Dargestellte ebenso.

Die Erfindung und ihre Weiterbildungen werden anhand von Figuren näher erläutert. Im Einzelnen zeigen:
- Figur 1:: fraktale, rekursive Anordnung mehrerer Produktionsmodule eines Produktionssystems
- Figur 2:: Aufbau eines selbst-ähnlichen Produktionsmoduls
- Figur 3:: Überblick über die Phasen "Plug" und "Automate"
- Figur 4:: Kooperation von zwei Produktionsmodulen zum Transport eines Werkstücks
- Figur 5:: Darstellung von Arbeitsbereichen der ersten und zweiten Produktionsfunktion, sowie in der Kooperationszone

Elemente mit gleicher Funktion und Wirkungsweise sind in den Figuren mit denselben Bezugszeichen versehen.
Figur 1 zeigt eine fraktale, rekursive Komposition von Produktionsmodulen PM, PM1, PM2. Diese Produktionsmodule, auch als cyberphysikalische Produktionseinheit, im Englischen Cyber Physical Production Entity, bezeichnet, können in jeder Ebene des Produktionssystems PS, auch als Cyber physikalisches Produktionssystem, im englischen Cyber Physical Production System, bekannt, vorkommen. In Figur 1 haben sich drei Produktionsmodule in einem ersten Produktionsmodulsystem PMS1 zusammengeschlossen und treten nach außen zu anderen Produktionsmodulen wie ein weiteres Produktionsmodul auf. So sind in einem Produktionsmodulsystem PMS2 weitere drei Produktionsmodule zusammengeschlossen und treten gegenüber anderen Produktionsmodulen wie ein einziges Produktionsmodul auf. In einem dritten Produktionsmodulsystem PMS3 sind weitere drei Produktionsmodule zu sehen. Aufgrund des fraktalen Designs der jeweiligen Produktionsmodule können diese drei Produktionsmodule sich zur Zusammenarbeit d.h. Kooperation in ihrer jeweiligen Kooperationszone zusammenschließen und treten nach außen hin wie ein einziges Produktionsmodul auf. In ihrer Gesamtheit bilden alle Produktionsmodule bzw. Produktionsmodulsysteme das Produktionssystem PS. Aufgrund der hierarchischen "whole-part" Struktur zeigt jedes Element in der Hierarchie, unabhängig ob es als Produktionsmodul oder als Zusammenfassung mehrerer Produktionsmodul vorliegt, dieselben Eigenschaften bezüglich seiner Schnittstellen und seines funktionalen Verhaltens. Hieraus kann durch die selbst-ähnlichen Produktionsmodule ein fraktales Produktionssystem erzeugt werden. Jede konkrete Anordnung des Produktionsmoduls in der Hierarchie ist für sich auch wieder fraktal, wodurch ein fraktales Design in dem gesamten Produktionssystem in jeder Hierarchiestufe rekursiv erzwungen wird.
Figur 2 zeigt einen beispielhaften Aufbau eines Produktionsmoduls PM, PM1, PM2. In Figur 2 sind grundlegende Funktionsblöcke abgebildet, um den funktionellen Aufbau des Produktionsmoduls darzustellen. Jedes Produktionsmodul verfügt über elektrische und mechanische Komponenten, wie beispielsweise eine Stromversorgung oder mechanische Elemente eines Roboterarms. Diese sind im Hardwareblock 200 dargestellt. Ferner weist das Produktionsmodul einen Automatisierungsblock 205 auf, der grundlegende Automatisierungsfunktionen mittels Controller, Aktoren und Sensoren zur Verfügung stellt. Dieser Automatisierungsblock ist sowohl in Hardware ausgebildet, nutzt aber zumindest teilweise Software, um diese Hardware für die darüber liegenden Schichten nutzbar zu machen, wie beispielsweise Auslesen eines Sensorwertes oder Angabe eines Anpressdrucks, den ein Greifer eines Roboterarm zum Greifen eines Werkstücks umsetzen muss. Der Roboterarm kann Teil des Hardwareblocks 200 und des Automatisierungsblock 205 sein.

Auf den Automatisierungsblock aufbauend sind softwarebasierte Blöcke realisiert, die durch eine Prozessoreinheit und dessen Betriebssystem realisierbar sind - die Prozessoreinheit und das Betriebssystem sind in Figur 2 nicht abgebildet. Ein Block 210 stellt als Softwaremodul eine serviceorientierte Architektur in Form einer Laufzeitinfrastruktur bereit, welche als Basis für die spezifischen Services des Produktionsmoduls, beispielsweise gemäß einem Standard SOA, dient. Teil des Blocks 210 ist ein Dienst 220, der für die Registrierung und das Aufspüren von Services verantwortlich ist. Ferner verfügt der Block 210 über eine Netzanbindungsfunktionalität 215, mit dem über Schnittstellen die Services von außen zugreifbar gemacht werden. Damit lassen sich die Services von außen, wie beispielsweise von dem weiteren Produktionsmodul steuern und auswerten.

Aufbauend auf dem Block 210 werden die Services Produktionsservice SPF, Selbstbeschreibungsservice SSD, Koppelservice SKD und Automatisierungsservice SAS bereitgestellt, wobei die oben genannten Services folgende Aufgaben erfüllen:
- Produktionsservice SPF: das Produktionsmodule definiert einen Satz von Produktionsfunktionen PF1, die das Produktionsmodul autonom ausführen kann, wie beispielsweise Fräsen eines Holzblock. Die Ausführung der Produktionsfunktion wird durch eine MOM- Funktionalität (MOM - Manufacturing Operations Management) geplant und gesteuert. Um die Produktionsfunktion autonom ausführen zu können, verfügt die jeweilige Produktionsfunktion über benötigte Echtzeit Kontrollprogramm, SCADA (SCADA-Supervisory control and data acquisition), DCS (DCS-distributed control system), MES (MES-Manufacturing Execution System) Softwarefunktionen, wie geschlossene Regelkreise, Datenanalyse, Produktionsplanung, Chargensteuerung und HMI- Funktionalitäten (HMI - Human Maschine Interfaces). Zudem kann auf Funktionen der Automatisierungsschicht 205 und auf den Hardwareblock 200 bei Bedarf zugegriffen werden.
- Selbstbeschreibungsservice SSD: der Selbstbeschreibungsservice stellt Selbstbeschreibungsinformation mit Eigenschaften der Produktionsfunktion zum Mitteilen an ein weiteres Produktionsmodul bereit und kann auch zumindest Teile einer weiteren Selbstbeschreibungsinformation der weiteren Produktionsfunktion des weiteren Produktionsmoduls aufnehmen. Die Selbstbeschreibungsinformation beschreibt diverse Eigenschaften der Produktionsfunktion, wie beispielsweise welche Art Produktionsfunktion ist, zum Beispiel Fräsen oder Sieben, Beschränkungen der Produktionsfunktion, zum Beispiel wie schwer oder welche Ausmaße ein Werkstück sein darf, einen Betriebsbereich der Produktionsfunktion, zum Beispiel für ein Förderband eine Förderbandgeschwindigkeit von 1 cm/s bis 35 cm/s, welche Befehle es versteht, wie beispielsweise Start und Stopp, welche Zustände die Produktionsfunktion liefert, zum Beispiel Produktionsfunktion ist bereit zur Aufnahme eines Werkstücks, welche Zustände die Produktionsfunktion verstehen kann, zum Beispiel die weitere Produktionsfunktion ist aktuell beschäftigt. Der Selbstbeschreibungsservice ist auch als Digital Twin Service, d. h. digitaler Zwilling, bekannt.
- Koppelservice SKD: mithilfe des Koppelservices kann das Produktionsmodul mit dem weiteren Produktionsmodul in einer Kooperationszone KZO eine gemeinsame Interaktion aushandeln, wie beispielsweise Übergabe eines Werkstücks welche nacheinander erfolgt oder ein gleichzeitiges Bearbeiten eines Werkstücks, wobei beispielsweise die Produktionsfunktion das Werkstück hält während die weitere Produktionsfunktion ein Gewinde in das Werkstück schneidet. Der Koppelservice legt dabei diverse Parameter, Befehle und Zustände fest, um die Interaktion der Produktionsfunktion mit der weiteren Produktionsfunktion zu ermöglichen. Dabei kann es unter Umständen mehrere Kooperationszonen mit verschiedenen Sätzen an Parametern, Befehlen und Zuständen geben, wobei in jeder Kooperationszone eine spezifische Interaktion der Produktionsfunktion mit der weiteren Produktionsfunktion stattfindet. Dabei liegt der Koppelservice die Parameter, Befehle und Zustände nur insoweit fest, dass damit die Interaktion grundsätzlich realisierbar ist, wobei eine spezifische Anpassung der Parameter, Befehle und Zustände durch den Automatisierungsservice gemäß einer Produktionsanforderung zur Fertigung eines spezifischen Produktes, d.h. aus dem Werkstück durch ein oder mehrere Produktionsfunktionen, festgelegt wird. Beispielsweise repräsentieren die Produktionsfunktion und die weitere Produktionsfunktion jeweils einen Transport eines Werkstücks mittels eines Förderbandes. Im Rahmen des Koppelservice wird man festgelegt, dass die Geschwindigkeit beider Förderbänder identisch sein muss, und die Geschwindigkeit im Bereich 2 cm/s bis zu 15 cm/s liegen kann. Die konkrete Festlegung der Geschwindigkeit wird dann durch den Automatisierungsservice auf Basis der Produktion Anforderung festgelegt, wie beispielsweise 10 cm/s. Der Koppelservice stellt auch sicher, dass das Produktionsmodul eine Topologie weiterer Produktionsmodule in einem Verbund weiterer Produktionsmodule, beispielsweise als benachbarte oder übergeordnete weitere Produktionsmodule, erkennt. Ferner hilft der Koppelservice zu erkennen, welche Produktionsmodule mit der Produktionsfunktion in Interaktion treten können, weil sie beispielsweise einen sich gegenseitig überschneiden Arbeitsbereich aufweisen oder Produktionsfunktionen bereitstellen, die koppelbar sind, d.h. zusammenwirken können.
- Automatisierungsservice SAS: der Automatisierungsservice legt spezifische Parameter, Befehle und Zustände zum Ausführen der Produktionsfunktion für ein spezifisches Produkt gemäß der Produktionsanforderung in Form einer Kooperationsinformation INFO innerhalb der Kooperationszone fest.

Figur 2 zeigt weiterhin Schnittstellen 225, 230, 235 und COMP. Diese Schnittstellen dienen den dazugehörigen Services SPF, SDD, SKD und SPF im Allgemeinen dazu, Daten mit anderen Services in eigenen Produktionsmodul und/oder dem weiteren Produktionsmodul austauschen. Die Schnittstellen können je nach Anforderung, wie Verzögerung und Bandbreite, unterschiedlich ausgestaltet sein.

Insbesondere die Schnittstelle COMP, die auch als Produktionsschnittstelle bezeichnet wird, ist als öffentlich zugängliches Service Interface für den Produktionsservice ausgestaltet. Diese Schnittstelle erlaubt Informationen zwischen Produktionsmodulen sowohl in Form von Kommandos als auch in Form von Zuständen auszutauschen. Diese ist als schlanke und uniforme Schnittstelle ausgebildet, so dass generische Kommandos und Zustände zur Steuerung beliebiger Produktionsfunktionen realisierbar und ausführbar sind.

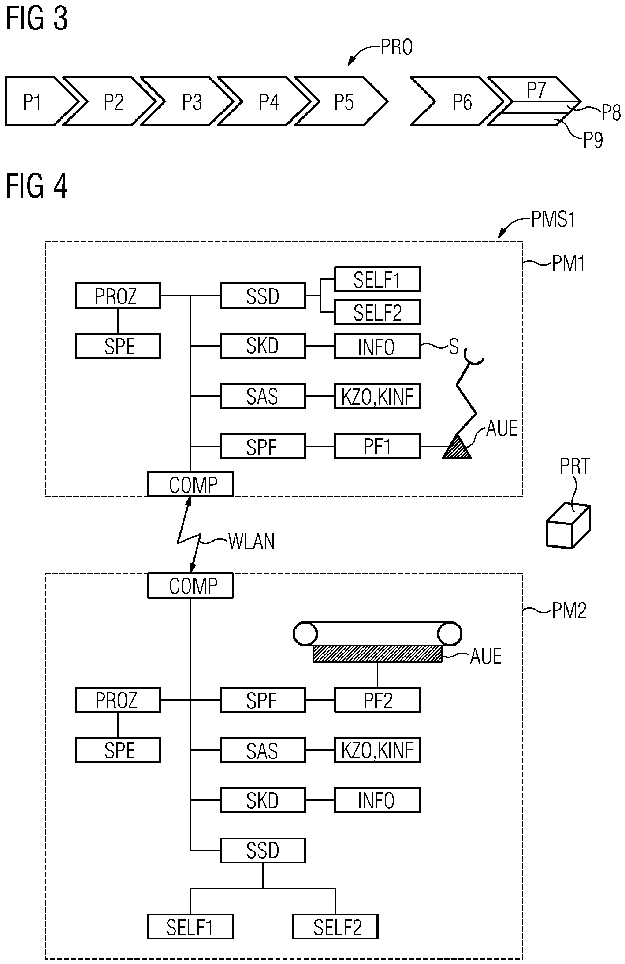

Figur 3 beschreibt die zwei Phasen "Plug" und "Automate", wobei durch den Koppelservice die Plug-Phase und durch den Automatisierungsservice die "Automate"-Phase, d.h. die Automatisierungsphase, implementiert und realisiert wird. Folgende Schritte P1 bis P5 werden in der "Plug"-Phase durchlaufen:
- P1:: nachdem das Produktionsmodul mit Strom versorgt wird, wird es gebootet, initialisiert, wobei es beispielsweise seine diversen Services und seine Netzwerkverbindung, beispielsweise drahtlos, aufbaut, um damit mit weiteren Produktionsmodulen in Kontakt zu treten;
- P2:: das Produktionsmodul erkundet eine Topologie an weiteren Produktionsmodulen, beispielsweise benachbarte oder übergeordnete Produktionsmodule des fraktalen Produktionssystems. Ferner erkundet es, welche Produktionsfunktionen von der aktuellen Position des selbstähnlichen Produktionsmoduls innerhalb des fraktale Produktionssystems in Abhängigkeit von der erkannten Topologie erreichbar sind.
- P3:: das Produktionsmodul publiziert seine zumindest eine Produktionsfunktion mithilfe der Selbstbeschreibungsinformation an weitere Produktionsmodule in dem fraktalen Produktionssystem.
- P4:: das Produktionsmodul verhandelt mit zumindest einem weiteren Produktionsmodule zur Festlegung einer Kooperationszone bei der die Produktionsfunktion mit der weiteren Produktionsfunktion, insbesondere nacheinander oder gleichzeitig, auf oder für das Produkt ausgeführt werden können. Dabei werden grundlegende Parameter, wie beispielsweise Befehle und Zustände, festgelegt.
- P5:: das Produktionsmodul abonniert Zustände des weiteren Produktionsmoduls in der Kooperationszone, um von dem weiteren Produktionsmodul bei Zustandsänderung informiert zu werden. Ebenso, abonniert das weitere Produktionsmodul Zustände beim Produktionsmodul.

Nachdem der Automatisierungsservice eine Produktionsanforderung erhält, ein Produkt aus einem Werkstück gemäß einer Produktionsanforderung zu bearbeiten, wird die Kooperationsinformation der Kooperationszone festgelegt. Dazu durchläuft das Produktionsmodul in der "Automate"-Phase die Schritte P6 bis P9:
- P6:: im Schritt P6 wartet das Produktionsmodul mittels seiner Produktionsschnittstelle auf Befehle und / oder Zustandsinformationen, die das Produktionsmodul von dem weiteren Produktionsmodul erhält. Daraufhin kann eine der Schritte P7 bis P9 durchgeführt werden, wobei nach Erledigung einer der Schritte P7 bis P9 im Schritt P6 fortgesetzt wird.
- P7:: in diesem Schritt findet eine Rekonfiguration der Kooperationszone, beispielsweise aufgrund von Änderungen des zu produzierenden Produktes oder Änderungen innerhalb des Produktionssystems, statt. Hierzu können nachfolgend die Schritte P2, P3 und P6 durchlaufen werden.

- P8:: im Schritt P8 wird die im Schritt P4 definierte und anschließend parametrisierte Produktionsfunktion ausgeführt. So kann nach Erhalt eines Befehl "start" im Schritt P6 im Schritt P8 ein Greifer eines Roboterarms das Werkstück aufnehmen und in eine Vorrichtung einlegen, in der die weitere Produktionsfunktion ausgeführt werden kann. Nach Ausführen der Produktionsfunktion wieder in seine Startposition zurück und wartet erneut auf den Befehl "start".
- P9:: in diesem Schritt findet eine gemeinsame Bearbeitung an dem Werkstück statt. So kann die Produktionsfunktion das Werkstück aufnehmen und zunächst halten, während das weitere Produktionsmodul ihre weitere Produktionsfunktion ausführt. Nachdem die weitere Produktionsfunktion abgeschlossen ist legt die Produktionsfunktion das Werkstück, d. h. das zu fertigende Produkt, auf einem Förderband ab. Danach ist die gemeinsame Bearbeitung abgeschlossen.

Figur 4 zeigt in einer beispielhaften Ausgestaltung den Zusammenschluss von dem ersten Produktionsmodul und dem zweiten Produktionsmodul zu einem Produktionsmodulsystem PMS1, welches sich wie ein Produktionsmodul verhält.

Das erste Produktionsmodul PM1 weist als Ausführeinheit AUE einen steuerbaren Greifarm auf, mit dem ein Werkstück an eine ersten Position in einem quaderförmigen Arbeitsbereich aufgenommen und an einer zweiten Position in diesem quaderförmigen Arbeitsbereich übergegeben werden kann. Somit besteht die erste Produktionsfunktionen PF1 aus einem Transportieren des Werkstücks in dem vorgebbaren Arbeitsbereich. Neben dem Transportieren kann das erste Produktionsmodul das Werkstück auch über einen Zeitraum lagern, d.h. dieses Werkstück verbleibt beispielsweise für 10 Minuten im Greifer des Greifarms.

Das erste Produktionsmodul weist ferner eine Prozessoreinheit PROZ mit einer Speichereinheit auf, mit der ein Produktionsservice SPF, ein Selbstbeschreibungsservice SSD, ein Koppelservice SKD und ein Automatisierungsservice SAS realisierbar sind. Zudem weist das Produktionsmodul eine Drahtlosschnittstelle , beispielweise nach einem WLAN (WLAN - Wireless Local Area Network), gemäß einer oder mehrerer IEEE802.11 Spezifikationen, auf, über die die Schnittstellen der einzelnen Services mit Services des zweiten Produktionsmodul beispielsweise Selbstbeschreibungsinformationen, Befehle und Parameter austauschen können - in Fig. 4 nicht detailliert dargestellt. So tauscht auch die Produktionsschnittstelle COMP über die Drahtlosschnittstelle Befehle und Zustände mit dem zweiten Produktionsmodul aus. Anstelle oder zusätzlich können die Produktionsmodule im Allgemeinen über drahtlose und /oder drahtgebundene Kommunikationsschnittstelle gegenseitig Informationen, Parameter und Befehle austauschen.

Das erste Produktionsmodul weist als Selbstbeschreibungsinformation SELF1 folgende Inhalte auf:
Konfigurationsdaten:
- Lage: X=500cm, Y=300cm
- Arbeitsbereich um die Lage:
   X=-250cm ... +250cm,
   Y=-200cm ... +200cm,
   Z=0cm ... +300cm
- Ausgestaltung: kann Produkte bis zu einer Größe von 20cmx20cmx200cm aufnehmen
Fähigkeitsdaten:
- Typdaten: Transportieren, Lagern
- Parametrisierungsdaten:
   - Startposition
   - Endposition
- Daten zu Randbedingungen: max. 2kg Gewicht
- Befehlsdaten eingehend:
   - Start
- Zustandsdaten:
   - Eingehend: keine Angabe
   - Ausgehend: bereit, Werkstück abgeholt

Als Konfigurationsdaten zeigt die Selbstbeschreibungsinformation eine Lage des Greifarms, d.h. eine örtliche Position in der Produktionshalle an der Stelle X = 500cm und Y = 300cm bezogen auf einen fixen Referenzpunkt in der Produktionshalle. Ferner wird als Arbeitsbereich des Greifarm ein Quader um die Lage des Greifarm beschrieben, wobei der Greifarm das Werkstück im folgenden absoluten Arbeitsbereich in der Produktionshalle auf- bzw. übergeben kann:
X-Achse: 500cm - 250cm = 250cm bis 500cm + 250cm = 750cm
Y-Achse: 300cm - 200cm = 100cm bis 300cm + 200cm = 500cm
Z-Achse: 0cm bis 300cm

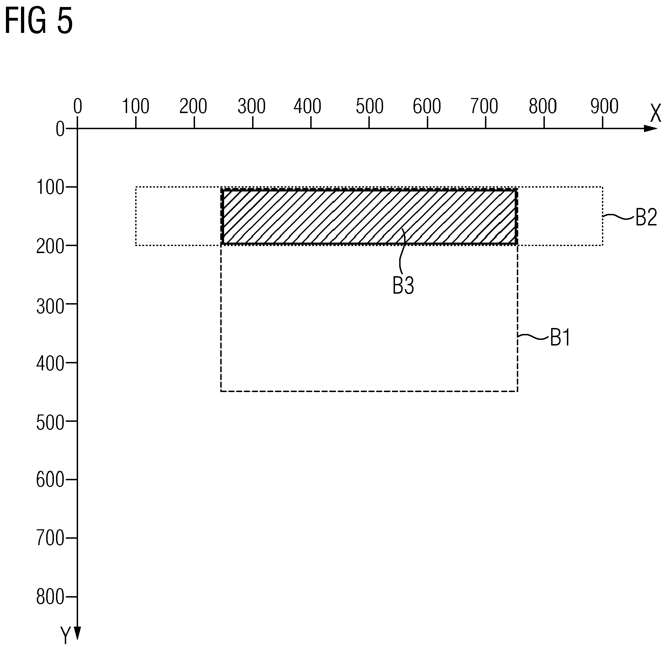

Die X- und Y- Achsen liegen in der Ebene des Bodens der Produktionshalle und die Z-Achse beschreibt eine zum Boden senkrechte Ausdehnung, d.h. in die Höhe. Ein erster Bereich B1, beschrieben durch die X- und Y-Achse ist in Figur 5 gestrichelt dargestellt.

Ferner wird durch die Ausgestaltung definiert, dass der Greifarm Werkstücke in einer Größe von 20cm x 20cm x 200cm greifen und transportieren kann.

Als Fähigkeitsdaten beschreibt die Selbstbeschreibungsinformation, dass die Produktionsfunktionen vom Typ Transportieren bzw. Lagern sind. Ferner können eine Startposition und Endposition des Greifers durch das zweite Produktionsmodul parametrisiert werden. Der Greifer kann maximal 2 kg Gewicht aufnehmen. Das zweite Produktionsmodul kann als Befehlsdaten die autonome Produktionsfunktion starten. Zudem können von dem ersten Produktionsmodul als Zustandsdaten übermittelt werden, dass das erste Produktionsmodul "bereit" ist die erste Produktionsfunktion wieder auszuführen. Zudem kann das erste Produktionsmodul signalisieren, dass es das Werkstück abgeholt hat. Zu eingehenden Zustandsdaten eines weiteren Produktionsmoduls sind keine Angaben hinterlegt.

Das zweite Produktionsmodul PM2 ist analog zu dem ersten Produktionsmodul aufgebaut. Als Ausführeinheit AUE weist das zweite Produktionsmodul ein Förderband auf. Das zweite Produktionsmodul weist als Selbstbeschreibungsinformation SELF 1 Folgendes auf:
Konfigurationsdaten:
- Lage: X=100cm...900cm, Y=100cm...200cm
- Arbeitsbereich: X=0cm...800cm, Y=0cm...100cm, Z=80cm
- Ausgestaltung: kann Produkte bis zu einer Größe von 100cm x 100 cm x 100cm aufnehmen
Fähigkeitsdaten:
- Typdaten: Transportieren, Lagern
- Parametrisierungsdaten:
   - Geschwindigkeit: 0-10cm/s
   - Richtung: Vorwärts / Rückwärts
- Daten zu Randbedingungen:
   - Richtungswechsel nur bei Geschwindigkeit = 0
   - max. Transportgewicht: 10kg
- Befehlsdaten eingehend:
   - Geschwindigkeit
   - Richtung
   - Start
- Zustandsdaten:
   - Eingehend: bereit, Werkstück abgeholt
   - Ausgehend: Geschwindigkeit, Richtung

Als Konfigurationsdaten zeigt die Selbstbeschreibungsinformation eine Lage des Förderbands, d.h. eine örtliche Position in der Produktionshalle, welche eine Fläche einnimmt, mit X = 100cm bis 900cm und Y = 100cm bis 200cm bezogen auf einen fixen Referenzpunkt in der Produktionshalle. Ferner wird als Arbeitsbereich des Förderbands eine Fläche in einer Ebene in der Produktionshalle beschrieben, in der das Werkstück durch das Förderband transportierbar bzw. lagerbar ist. Diese Fläche umfasst folgende Ausmaße in der Produktionshalle:
X-Achse: 100cm bis 900cm, d.h. eine Länge des Förderbands von 800cm
Y-Achse: 100cm bis 200cm, d.h. eine Breite des Förderbans von 100cm
Z-Achse: 80cm, d.h. das Band des Förderbands ist auf einer Höhe von 80cm angebracht;

Die X- und Y- Achsen liegen in der Ebene des Bodens der Produktionshalle und die Z-Achse beschreibt eine zum Boden senkrechte Ausdehnung, d.h. in die Höhe. Das Werkstück kann somit in der durch die X-, Y- und Z-Achse beschriebenen Fläche abgelegt und dort von dem Förderband transportiert bzw. gelagert werden. In Figur ist ein zweiter Bereich B2 abgebildet, der den Arbeitsbereich des Förderbands in der X- und Y-Ebene in der Produktionshalle, umrandet mit gepunkteten Linien, wiedergibt.

Ferner wird durch die Ausgestaltung definiert, dass das Förderband Werkstücke in einer maximalen Größe von 100cm x 100cm x 100cm transportieren bzw. lagern kann.

Die Selbstbeschreibungsinformation beschreibt die folgenden Fähigkeitsdaten. Die verfügbare Produktionsfunktion ist Transportieren bzw. Lagern. Die Produktionsfunktion ermöglicht eine Parametrisierung der Geschwindigkeit von 0-10cm/s. Ferner kann das Förderband das Werkstück vorwärts und rückwärts transportieren. Als Randbedingung beim Ausführen der zweiten Produktionsfunktionen darf ein Richtungswechsel nur bei einer Geschwindigkeit von 0 cm/s erfolgen und das maximale Gewicht des Werkstücks beträgt 10kg. Zum Steuern der zweiten Produktionsfunktion kann als Befehlsdaten eine Geschwindigkeit, eine Richtung und ein Start der zweiten Produktionsfunktionen an den Produktionsservice des zweiten Produktionsmoduls PM2 übergeben werden. Das zweite Produktionsmodul übermittelt als Zustandsdaten die aktuelle Geschwindigkeit und die Richtung des Förderbandes. Als eingehende Zustandsdaten werden erkennt, dass die zu koppelnde Produktionsfunktion bereit ist gestartet zu werden und, dass das Werkstück von dem Förderband abgeholt wurde. Im Allgemeinen wird in dieser Patentanmeldung die Parametrisierung der Produktionsfunktion synonym zu dem Begriff Betriebsparameter der Produktionsfunktion verwendet.

Nachdem das erste Produktionsmodul und das zweite Produktionsmodul in der Produktionshalle aufgestellt und mit Strom versorgt werden, konfigurieren sich die Produktionsmodule derart, dass diese zur Durchführung der Erfindung bereitstehen. So starten beide Produktionsmodule eine Discovery basierende auf dem SOA Protokoll über das jeweilige WLAN Interface und erkennen, dass folgende Services gegenseitig adressierbar sind:
- Produktionsservice (SPF);
- Selbstbeschreibungsservice (SSD)
- Koppelservice (SKD);
- Automatisierungsservice (SAS).

In einem nächsten Schritt rufen beide Produktionsmodule die jeweiligen Selbstbeschreibungsdaten mit Hilfe des Selbstbeschreibungsservices SSD des anderen Produktionsmoduls ab und speichern diese als jeweils weitere Selbstbeschreibungsinformation SELF2 bei sich. Danach werden die Selbstbeschreibungsinformation SELF1 und die weitere Selbstbeschreibungsinformation SELF2 durch die beiden Produktionsmodule analysieren.

Im nachfolgenden Schritt wird auf Basis der vorangegangenen Analyse durch den Koppelservice SKD der jeweiligen Produktionsmodule geprüft, ob die beiden Produktionsmodule eine Kooperationszone bilden können, in der beide zusammenwirken können, z.B. Ausführen der Produktionsfunktion des Förderbands und zeitlich nachfolgend der Produktionsfunktion des Greifarms. Folgende "sinnvolle" Kombinationen werden erkannt:

| | |
|---|---|
| Typdaten Förderband | Typdaten Greifarm |
| Transportieren | Lagern |
| Lagern | Transportieren |
| Transportieren | Transportieren |

Es werden drei Kombinationen erkannt, die potentiell zusammenwirken können, falls es eine gemeinsame örtlich Überlappung bei der Ausführung der jeweiligen Produktionsfunktionen, charakterisiert durch die Typdaten, gibt. So gibt es im Bereich X=250cm...750cm, Y=100cm...200cm und Z=80cm eine räumliche Überlappung der Produktionsfunktionen Transportieren des Förderbands und Transportieren des Greifarms. Das bedeutet, dass in diesem örtlichen Bereich eine Kooperationszone KZO gefunden wurde und beide Produktionsfunktionen zusammenwirken können. Zudem kann bei Kooperation der Produktionsfunktion Transportieren des ersten und des zweiten Produktionsmoduls das Werkstück maximal ein Gewicht von 2kg und ein Größe von 20cm x 20cm x 100cm aufweisen.

Im Allgemeinen ermittelt die Analyse die für beide Produktionsmodule zulässige Arbeitsgrößen, wie z.B. örtliche Lage, maximales Gewicht und maximale Größe des Werkstücks. Mathematisch bedeutet dies, dass eine Menge an Informationen aus der Selbstbeschreibungsinformation der jeweiligen Produktionsmodule ermittelt wird, die in beiden Produktionsmodulen vorkommen, d.h. sozusagen eine Schnittmenge für beide Produktionsmodule gebildet wird. Denn nur bei dieser "Schnittmenge" ist eine Kooperation beider Produktionsmodule in der Kooperationszone "sinnvoll" möglich.

Somit werden im Speicher SPE der beiden Produktionsmodule folgende Kooperationsinformationen INFO für die Kooperationszone KZO für das Kooperationsscenario Transport des Werkstücks durch das Förderband und zeitlich nachfolgend Transport durch den Greifarm hinterlegt:
Kooperationsinformation INFO des zweiten Produktionsmoduls:
- Produktionsmodul:
   - Typdaten: Transportieren - Transportieren
   - Richtung: Förderband -> Greifarm
- Parametrisierungsdaten:
   - Endposition: X=250cm ... 750cm, Y=100cm...200cm, Z=80cm
- Befehlsdaten:
   - Ausgehend: START
- Zustandsdaten:
   - Eingehend: bereit, Werkstück abgeholt

Hierbei speichert das zweite Produktionsmodul die Kooperationsinformationen, dass es mit dem ersten Produktionsmodul für eine Kooperation "Transportieren zu Transportieren" von dem Förderband zum Greifarm die Kooperationszone festlegt. Als Parametrisierungsdaten gibt die Kooperationsinformation an, dass die Endposition, an der der Greifarm, also die erste Produktionsfunktion, das Werkstück vom Förderband übernehmen, in dem Bereich X=250cm ... 750cm, Y=100cm...200cm, Z=80cm liegt, der bei einer späteren Festlegung eines Produktionsplanes noch spezifischer, z.B. in Form einer konkreten Position, festgelegt werden kann. Zudem wird festgelegt, dass als Zustandsdaten Eingehend das zweite Produktionsmodul eine Information von dem das ersten Produktionsmodul benötigt, dass dieses zur Durchführung der ersten Produktionsfunktion "bereit" ist. Zudem kann dem zweiten Produktionsmodul signalisiert werden, wenn die erste Produktionsfunktion das Werkstück von dem Förderband entnommen hat, d.h. "Werkstück abgeholt".

Im Allgemeinen werden Zustandsdaten durch die Kooperationsinformationen des jeweiligen Produktionsmoduls benötigt bzw. bereitgestellt, jedoch wird Ausgehend im zweiten Produktionsmodul mit Eingehend im ersten Produktionsmodul und Eingehend im ersten Produktionsmodul mit Ausgehend im zweiten Produktionsmodul gekoppelt. Durch diese Koppelung der eingehenden zu den ausgehenden Informationen wird die Kommunikation zwischen den zwei Produktionsmodulen beschrieben.

Ferner wird das zweite Produktionsmodul den Befehl "Start" an das erste Produktionsmodul senden, falls das Werkstück auf dem Förderband zum Abholen durch die erste Produktionsfunktion bereit steht.

Analog dazu hinterlegt das erste Produktionsmodul folgende Kooperationsinformation INFO für die Kooperationszone bei der Ausführung des Transportes des Werkstücks/Produkts durch das Förderband und zeitlich nachfolgend des Transportes durch den Greifarm:
Kooperationsinformation INFO des ersten Produktionsmoduls:
- Produktionsmodul:
   - Typdaten: Transportieren - Transportieren
   - Richtung: Förderband - Greifarm
- Parametrisierungsdaten:
   - Startposition: X=250cm ... 750cm, Y=100cm...200cm, Z=80cm
- Befehl eingehend: Start
- Zustandsdaten:
   - Ausgehend: bereit, Werkstück abgeholt

Das zweite Produktionsmodul steuert die erste Produktionsfunktion zu Abholen des Werkstücks an der absoluten Position in der Produktionshalle, z.B. X=500cm, Y=200cm, Z=80cm, durch den Befehl "Start", die erste Produktionsfunktion startet. Zudem liefert das erste Produktionsmodul als Zustandsinformation Ausgehend dem zweiten Produktionsmodul, dass die erste Produktionsfunktion "bereit" ist das Werkstück erneut zu transportieren, und, dass das Werkstück schon vom Förderband abgeholt worden ist.

Neben der Kombination Transportieren - Transportieren können auch weitere Kooperationszonen mit zugehörigen Kooperationsinformationen ermittelt und in dem jeweiligen Produktionsmodul abgespeichert werden. Zudem kann die Ermittlung der Kooperationszone auch für den zeitlich umgekehrten Fall durchgeführt werden, und zwar, dass der Greifarm eine Produktionsfunktion durchführt und dann zeitlich nachgelagert das Förderband eine seiner Produktionsfunktionen daran anschließt. Die Vorgehensweise zur Ermittlung der weiteren Kooperationszonen zwischen Förderband und Greifarm und Förderband kann analog zu obigen Ausführungsbeispiel durchgeführt werden.

Das zweite Produktionsmodul PM2 erhält eine Anfrage zum Transportieren eines Werkstücks von einer Position X=150cm; Y=150cm; Z=80cm nach einer zweiten Position X=700cm; Y=450cm; Z=200cm. Weder das erste Produktionsmodul PM1 noch das zweite Produktionsmodul PM2 können diese Anfrage alleine bewältigen. Jedoch kann das Produktionsmodulsystem PM1 diese Aufgabe übernehmen. Das zweite Produktionsmodul zusammen mit dem ersten Produktionsmodul agiert im Folgenden als Produktionsmodulsystem PM1, wobei die Kommunikation bzgl. der Anfrage sich nach außen genauso darstellt, als wenn das erste bzw. zweite Produktionsmodul alleine agieren würde. Im Folgenden wird bzgl. der Anfrage nur die Kooperation zwischen dem ersten und dem zweiten Produktionsmodul näher beschrieben. Es wird dabei angenommen, dass das Werkstück an der ersten Position X=150cm; Y=150cm; Z=80cm vorliegt und an der zweiten Position X=700cm; Y=450cm; Z=200cm abgelegt werden kann. In einer größeren Produktion würde das Produktionsmodulsystem eine Kooperationszone zu einem weiteren Produktionsmodul zur Übernahme des Werkstücks an der ersten Position und eine Kooperationszone zu einem weiteren Produktionsmodul zur Übergabe des Werkstücks an der zweiten Position erzeugen.

Im Folgenden werden die Automatisierungsservices SAS des ersten und zweiten Produktionsmoduls aufgerufen, wie dann die konkrete Ausgestaltung der Kooperationszone KZO herstellen. Diese konkrete Ausgestaltung wird als Kooperationsparameter KINF in dem jeweiligen Produktionsmodul erzeugt, wobei situativ auch eine Abstimmung zwischen den Automatisierungsservices der beiden Produktionsmodule stattfinden kann. So erzeugt das erste Produktionsmodul folgende Kooperationsparameter KINF:
Kooperationsparameter KINF des ersten Produktionsmoduls:
- Produktionsmodul: zweites Produktionsmodul
   - Typdaten: Transportieren - Transportieren
   - Richtung: Förderband - Greifarm
- Parametrisierungsdaten:
   - Übernahmeposition: X=600cm, Y=150cm, Z=80cm
- Befehl eingehend: Start
- Zustandsdaten:
   - Ausgehend: bereit, Werkstück abgeholt

Die Inhalte der Kooperationsparameter KINF ist identisch mit der Kooperationsinformation INFO des ersten Produktionsmoduls bis auf den Punkt Übernahmeposition, an dem die zweite Produktionsfunktion das Werkstück an die erste Produktionsfunktion übergibt. Hierbei haben sich beide Produktionsmodule darauf verständigt, dass an der Position X=600cm, Y=150cm, Z=80cm die zweite Produktionsfunktion das Werkstück zur Übernahme an die erste Produktionsfunktion bereitstellt.

Analog dazu wird im zweiten Produktionsmodul folgendes erstellt:
Kooperationsparameter KINF des zweiten Produktionsmoduls:
- Produktionsmodul: erstes Produktionsmodul
   - Typdaten: Transportieren - Transportieren
   - Richtung: Förderband -> Greifarm
- Parametrisierungsdaten:
   - Übernahmeposition: X=600cm, Y=150cm, Z=80cm
- Befehlsdaten:
   - Ausgehend: Start
- Zustandsdaten:
   - Eingehend: bereit, Werkstück abgeholt

In Figur 5 ist ein dritter Bereich B3, siehe Rechteck mit Schraffur eingezeichnet. Der dritte Bereich beschreibt den Bereich in der X- und Y-Ebene, in der die erste Produktionsfunktion und die zweite Produktionsfunktion das Werkstück übergeben können, weil beide Produktionsfunktionen diesen Bereich erreichen können. Im vorliegenden Beispiel haben sich beide Produktionsmodule auf die Übernahmeposition geeinigt, der sich innerhalb des dritten Bereichs befindet.

Nun startet die Produktion. Das erste Produktionsmodul sendet seinen Zustand "bereit" über seine Produktionsschnittstelle COMP. Die zweite Produktionsfunktion PF2 wird durch den Produktionsservice SPF des zweiten Produktionsmodul gesteuert, so dass das Förderband das Werkstück bis zur Übernahmeposition X=600cm, Y=150cm, Z=80cm transportiert und dort dann angehalten wird. Daraufhin sendet das zweite Produktionsmodul an das erste Produktionsmodul den Befehl "start" an die Produktionsschnittstelle COMP des ersten Produktionsmoduls, woraufhin der Produktionsservice des ersten Produktionsmoduls den Greifarm aus seiner Ruheposition zur Übernahmeposition X=600cm, Y=150cm, Z=80cm fährt, dort das Werkstück greift und dann den Greifarm mit dem Werkstück zur zweiten Position fährt, an der das Werkstück abgelegt werden soll. Dort lässt der Greifer das Werkstück aus und der Greifarm fährt in seine Ruheposition. Dann sendet das zweite Produktionsmodul dem ersten Produktionsmodul die Zustände, dass das Werkstück vom Förderband übernommen wurde und zudem die erste Produktionsfunktion bereit ist erneut gestartet zu werden. Danach kann die zweite Produktionsfunktion erneut ausgeführt werden und der in diesem Absatz beschrieben Ablauf wiederholt sich.

Die jeweiligen Produktionsmodule werden durch eine Kombination aus Hard- und Software realisiert. Dazu umfasst das jeweilige Produktionsmodul einen Prozessor, der mit einem Speicher verbunden ist, in dem zur Realisierung der Erfindung maschinenlesbarer Code zur Verarbeitung durch den Prozessor abgelegt ist. Zudem dient der Speicher zum Ablegen von Programmdaten, wie Zustandsinformationen oder Selbstbeschreibungsinformationen. Ferner weist das jeweilige Produktionsmodul Ein- und Ausgabeeinheiten auf, die mit dem Prozessor verbunden sind und zum Austausch von Daten, wie Selbstbeschreibungsinformationen, zwischen den Produktionsmodulen ausgebildet ist.

### Literaturliste

[1] E. Gamma et al., "Design Patterns: Elements of Reusable Object-oriented Software", Addison Wesley, 1995
[2] F. Buschmann et al., "Pattern-Oriented Software Architecture", Vol. 4, in "Pattern Language for Distributed Computing", John Wiley and Sons, 2006
[3] SOA - Service Oriented Architecture [https:// en.wikipedia.org/wiki/Service-oriented_architecture]

## Patentansprüche

1. Produktionsmodul (PM1, PM) zum Ausführen zumindest einer Produktionsfunktion (PF1) auf oder für ein Produkt (PRT), wobei die Produktionsfunktion (PF1) zum Zusammenwirken mit einer weiteren Produktionsfunktion (PF2) eines weiteren Produktionsmoduls (PM2) in einer Produktion (PRO) ausgestaltet ist, und das Produktionsmodul (PM1) als selbst-ähnliches fraktales Modul durch folgende Einheiten realisierbar ist:
a) Ausführeinheit (AUE) zum autonomen Ausführen der zumindest einen Produktionsfunktion (PF1);
b) eine Prozessoreinheit (PROZ) zum Bereitstellen von folgenden Services (SPF, SSD, SKD, SAS):
b1) Produktionsservice (SPF) zum Zugreifen auf die zumindest eine Produktionsfunktion (PF1);
b2) Selbstbeschreibungsservice (SSD) zum Bereitstellen und Mitteilen einer Selbstbeschreibungsinformation (SELF1) mit Eigenschaften der Produktionsfunktion (PF1) für das weitere Produktionsmodul (PM2) und zum Aufnehmen einer weiteren Selbstbeschreibungsinformation (SELF2) mit Eigenschaften der weiteren Produktionsfunktion (PF1);
b3) Koppelservice (SKD) zum Festlegen einer Kooperationszone (KZO) mittels Erstellung einer Kooperationsinformation (INFO), bei der die Produktionsfunktion (PF1) und die weitere Produktionsfunktion (PF2), insbesondere nacheinander oder gleichzeitig, auf oder für das Produkt (PRT) ausgeführt werden können;
b4) Automatisierungsservice (SAS) zum Festlegen von Kooperationsparameter (KINF) der Kooperationszone (KZO) zum Ausführen der Produktionsfunktion (PF1) auf oder für das Produkt (PRT) gemäß einer Produktionsanforderung;
c) Produktionsschnittstelle (COMP) Austausch einer Kontrollinformation (INFK) mit dem weiteren Produktionsmodul (PM2) in Form von Befehlen zum Steuern der Produktionsfunktion (PF1) und in Form zumindest einer Zustandsinformation der Produktionsfunktion (PF1) und zumindest einer weiteren Zustandsinformation der weiteren Produktionsfunktion (PF2).

2. Produktionsmodul (PM1) nach Anspruch 1, bei dem die Ausführeinheit (AUE) zum Ausführen der Produktionsfunktion (PF1) mittels mechanischer Komponenten, elektrischer Komponenten, Steuerungskomponenten, Sensorkomponenten oder Softwarekomponenten ausgebildet ist.

3. Produktionsmodul (PM1) nach einem der vorhergehenden Ansprüche, bei dem
die Selbstbeschreibungsinformation (SELF1) gemäß einem Standard OPC UA (OPC Unified Architecture) der OPC Foundation realisierbar und implementierbar sind.

4. Produktionsmodul (PM1) nach einem der vorhergehenden Ansprüchen, bei dem
der Koppelservice (SKD) ferner ausgestaltet ist, folgende Schritte zum Festlegen der Kooperationszone (KZO) zu realisieren:
- Erkennen einer Topologie des weiteren Produktionsmoduls in einem Verbund weiterer Produktionsmodule als benachbartes und/oder übergeordnetes weiteres Produktionsmoduls;
- Erkennen der weiteren Produktionsfunktion, die von einer Position des Produktionsmoduls (PM1) in dem Verbund der weiteren Produktionsmodule verfügbar und erreichbar ist;
- Mitteilen der Selbstbeschreibungsinformation (SELF1) an den Verbund der weiteren Produktionsmodule;
- Aushandeln einer Vorgehensweise, wie die Produktionsfunktion (PF1) und die weitere Produktionsfunktion (PF2), insbesondere nacheinander oder gleichzeitig, auf oder für das Produkt (PRT) ausgeführt werden können.

5. Produktionsmodul (PM1) nach Anspruch 4, bei dem im Schritt Aushandeln für die Kooperationszone (KZO) zumindest eine der folgenden Vorgehensweisen bestimmt ist:
- Bereitstellen einer Angabe eines örtlichen Bereichs, in dem die Produktionsfunktion und die weitere Produktionsfunktion auf oder für das Produkt ausführbar sind;
- Bereitstellen einer Vorgehensweise und Betriebsparameter der Produktionsfunktion und der weiteren Produktionsfunktion für eine Übergabe des Produkts von der Produktionsfunktion zur weiteren Produktionsfunktion;
- Bereitstellen einer Vorgehensweise und Betriebsparameter der Produktionsfunktion und der weiteren Produktionsfunktion für ein gemeinsames Vorgehen bzgl. des Produktes oder bzgl. eines Betriebsmittels zum Ausführen der Produktionsfunktion und der weiteren Produktionsfunktion.

6. Produktionsmodul (PM1) nach einem der vorhergehenden Ansprüchen, bei dem
der Automatisierungsservice (SAS) ferner ausgestaltet ist, bei einer Änderung bzgl. des Produktionsmoduls (PM1) oder bzgl. des weiteren Produktionsmoduls (PM2) den Koppelservice (SKD) und das Festlegen der Kooperationsparameter (KINF) der Kooperationszone (KZO) zu initiieren.

## Geänderte Patentansprüche

### Geänderte Patentansprüche gemäss Regel 137(2) EPÜ.

1. Produktionsmodul (PM1, PM) zum Ausführen zumindest einer Produktionsfunktion (PF1) auf oder für ein Produkt (PRT), wobei die Produktionsfunktion (PF1) zum Zusammenwirken mit einer weiteren Produktionsfunktion (PF2) eines weiteren Produktionsmoduls (PM2) in einer Produktion (PRO) ausgestaltet ist, und das Produktionsmodul (PM1) durch folgende Einheiten realisierbar ist:
a) Ausführeinheit (AUE) zum autonomen Ausführen der zumindest einen Produktionsfunktion (PF1);
b) eine Prozessoreinheit (PROZ) zum Bereitstellen von folgenden Services (SPF, SSD, SKD, SAS):
b1) Produktionsservice (SPF) zum Zugreifen auf die zumindest eine Produktionsfunktion (PF1);
b2) Selbstbeschreibungsservice (SSD) zum Bereitstellen und Mitteilen einer Selbstbeschreibungsinformation (SELF1) mit Eigenschaften der Produktionsfunktion (PF1) für das weitere Produktionsmodul (PM2) und zum Aufnehmen einer weiteren Selbstbeschreibungsinformation (SELF2) mit Eigenschaften der weiteren Produktionsfunktion (PF1);
b3) Koppelservice (SKD) zum Festlegen einer Kooperationszone (KZO) mittels Erstellung einer Kooperationsinformation (INFO), bei der die Produktionsfunktion (PF1) und die weitere Produktionsfunktion (PF2), insbesondere nacheinander oder gleichzeitig, auf oder für das Produkt (PRT) ausgeführt werden können;
b4) Automatisierungsservice (SAS) zum Festlegen von Kooperationsparameter (KINF) der Kooperationszone (KZO) zum Ausführen der Produktionsfunktion (PF1) auf oder für das Produkt (PRT) gemäß einer Produktionsanforderung;
c) Produktionsschnittstelle (COMP) Austausch einer Kontrollinformation (INFK) mit dem weiteren Produktionsmodul (PM2) in Form von Befehlen zum Steuern der Produktionsfunktion (PF1) und in Form zumindest einer Zustandsinformation der Produktionsfunktion (PF1) und zumindest einer weiteren Zustandsinformation der weiteren Produktionsfunktion (PF2);
**dadurch gekennzeichnet, dass** das Produktionsmodul (PM1) als selbst-ähnliches fraktales Modul durch die vorgenannten Einheiten realisiert ist.

2. Produktionsmodul (PM1) nach Anspruch 1, bei dem die Ausführeinheit (AUE) zum Ausführen der Produktionsfunktion (PF1) mittels mechanischer Komponenten, elektrischer Komponenten, Steuerungskomponenten, Sensorkomponenten oder Softwarekomponenten ausgebildet ist.

3. Produktionsmodul (PM1) nach einem der vorhergehenden Ansprüche, bei dem die Selbstbeschreibungsinformation (SELF1) gemäß einem Standard OPC UA (OPC Unified Architecture) der OPC Foundation realisierbar und implementierbar sind.

4. Produktionsmodul (PM1) nach einem der vorhergehenden Ansprüchen, bei dem der Koppelservice (SKD) ferner ausgestaltet ist, folgende Schritte zum Festlegen der Kooperationszone (KZO) zu realisieren:
- Erkennen einer Topologie des weiteren Produktionsmoduls in einem Verbund weiterer Produktionsmodule als benachbartes und/oder übergeordnetes weiteres Produktionsmoduls;
- Erkennen der weiteren Produktionsfunktion, die von einer Position des Produktionsmoduls (PM1) in dem Verbund der weiteren Produktionsmodule verfügbar und erreichbar ist;
- Mitteilen der Selbstbeschreibungsinformation (SELF1) an den Verbund der weiteren Produktionsmodule;
- Aushandeln einer Vorgehensweise, wie die Produktionsfunktion (PF1) und die weitere Produktionsfunktion (PF2), insbesondere nacheinander oder gleichzeitig, auf oder für das Produkt (PRT) ausgeführt werden können.

5. Produktionsmodul (PM1) nach Anspruch 4, bei dem im Schritt Aushandeln für die Kooperationszone (KZO) zumindest eine der folgenden Vorgehensweisen bestimmt ist:
- Bereitstellen einer Angabe eines örtlichen Bereichs, in dem die Produktionsfunktion und die weitere Produktionsfunktion auf oder für das Produkt ausführbar sind;
- Bereitstellen einer Vorgehensweise und Betriebsparameter der Produktionsfunktion und der weiteren Produktionsfunktion für eine Übergabe des Produkts von der Produktionsfunktion zur weiteren Produktionsfunktion;
- Bereitstellen einer Vorgehensweise und Betriebsparameter der Produktionsfunktion und der weiteren Produktionsfunktion für ein gemeinsames Vorgehen bzgl. des Produktes oder bzgl. eines Betriebsmittels zum Ausführen der Produktionsfunktion und der weiteren Produktionsfunktion.

6. Produktionsmodul (PM1) nach einem der vorhergehenden Ansprüchen, bei dem der Automatisierungsservice (SAS) ferner ausgestaltet ist, bei einer Änderung bzgl. des Produktionsmoduls (PM1) oder bzgl. des weiteren Produktionsmoduls (PM2) den Koppelservice (SKD) und das Festlegen der Kooperationsparameter (KINF) der Kooperationszone (KZO) zu initiieren.
